# EUROPÄISCHE PATENTANMELDUNG

(11) **EP 4 717 987 A2**
(43) Veröffentlichungstag der Anmeldung: **01.04.2026**
(21) Anmeldenummer: 25199925.6
(22) Anmeldetag: 03.09.2025
(51) Int. Cl.: F24F 1/60, F16M 7/00, F24F 13/22, F24F 13/32, F24H 9/06, F24H 9/16

(54) **MONTAGEEINHEIT UND SICKERSCHACHT FÜR EINE AUSSENEINHEIT EINER WÄRMEPUMPE**

(30) Priorität: 06.09.2024 DE 102024125665
(71) Anmelder: ACO Ahlmann SE & Co. KG, 24782 Büdelsdorf (DE)
(72) Erfinder: Hippler, Andreas, 24808 Jevenstedt (DE); Luttmer, Jörg, 24306 Oberkleveez (DE); Quandt, Markus, 24105 Kiel (DE); Reinisch, Sven, 97797 Völkersleier (DE)
(74) Vertreter: Meissner Bolte Partnerschaft mbB

(57) **Zusammenfassung**

Die Erfindung betrifft eine Montageeinheit (10) für eine Außeneinheit einer Wärmepumpe mit mindestens zwei Trägerelementen (12) mit jeweils mindestens zwei zueinander beabstandeten Montagepunkten (14) zum Montieren der Montagefüße der Außeneinheit, wobei die Trägerelemente (12) parallel zueinander angeordnet sind und mindestens einen Steg (16), insbesondere mindestens zwei Stege, mit einem ersten Stegabschnitt (18) und einen zweiten Stegabschnitt (20), die jeweils mit einem der mindestens zwei Trägerelemente (12) verbunden sind, wobei der mindestens eine Steg (16) einen ersten Längenänderungsmechanismus (22) aufweist, um einen Abstand (A) zwischen den mindestens zwei Trägerelementen (12) variabel einzustellen. Ferner betrifft die Erfindung einen Sickerschacht (40).

## Beschreibung

Die Erfindung betrifft eine Montageeinheit sowie einen Sickerschacht für eine Außeneinheit einer Wärmepumpe.

Derzeit erfreuen sich Wärmepumpen einer zunehmenden Beliebtheit. Aufgrund von Gesetzesänderungen kommen Wärmepumpen nicht mehr nur im Neubau, sondern auch bei Gebäudesanierungen vermehrt zum Einsatz. Besonders häufig kommen Luft/-Wasser-Wärmepumpen zum Einsatz, da diese wenig Stellfläche benötigen, einfach zu montieren und kostengünstiger sind. Diese Luft-/Wasser-Wärmepumpen bestehen in der Regel aus einer Außeneinheit und einer Inneneinheit, die im Haus platziert wird. Die Außeneinheit wird direkt vor der Hauswand oder in näherer Entfernung zum Haus platziert.

Die Außeneinheit produziert ein Kondensat, welches abgeführt werden muss. Hierfür ist es notwendig, dass unter der Außeneinheit zur Aufnahme des Kondensats aus der Außeneinheit und zum Abführen in die Umgebung eine Sickerpackung vorgesehen ist, in die das Kondensat über ein vor Ort zu positionierendes Rohr eingeleitet wird.

Um die Außeneinheit sicher und genau platzieren zu können sind vor Ort entweder Streifenfundamente oder eine Betonplatte herzustellen, in bzw. auf denen die Außeneinheit dann mittels Schrauben zu befestigen ist.

Das Streifenfundament bzw. die Betonplatte wird derzeit spezifisch für die jeweils verwendete Wärmepumpe bzw. deren Außeneinheit hergestellt. Da die Installation der Wärmepumpe und das Herstellen des Streifenfundaments bzw. der Betonplatte und der darunterliegenden Sickerpackung bei einem Neubau oder einer Sanierung von unterschiedlichen Gewerken durchgeführt werden, ist hier ein hoher Abstimmungsbedarf notwendig, um zum einen die Funktionsweise der Außeneinheit und zum anderen die Ableitung des Kondensats und die Drainagewirkung gewährleisten zu können.

Der vorliegenden Erfindung liegt die Aufgabe zugrunde eine Montageeinheit für eine Außeneinheit einer Wärmepumpe zur Verfügung zu stellen, welche einfach zu handhaben ist, universell einsatzbar ist und den Abstimmungsbedarf der Gewerke und somit Fehler minimiert. Zusätzlich ist es Aufgabe der Erfindung einen Sickerschacht für eine Außeneinheit einer Wärmepumpe zur Verfügung zu stellen.

Diese Aufgabe wird durch eine Montageeinheit für eine Außeneinheit einer Wärmepumpe gemäß Anspruch 1 gelöst.

Ein erster Aspekt der Erfindung ist eine Montageeinheit für eine Außeneinheit einer Wärmepumpe mit mindestens zwei Trägerelementen mit jeweils mindestens zwei zueinander beabstandeten Montagepunkten zum Montieren der Montagefüße der Außeneinheit. Dabei sind die Trägerelemente parallel zueinander angeordnet. Zusätzlich ist mindestens ein Steg mit einem ersten Stegabschnitt und einem zweiten Stegabschnitt vorgesehen. Der erste Stegabschnitt und der zweite Stegabschnitt sind jeweils mit einem der mindestens zwei Trägerelemente verbunden. Der mindestens eine Steg weist einen ersten Längenänderungsmechanismus auf, um einen Abstand zwischen den mindestens zwei Trägerelementen variabel einzustellen.

Eine derartige Montageeinheit ermöglicht eine flexible Anpassung an diverse übliche Längserstreckung der existierenden Außeneinheiten. Dabei kann auf einfache Art und Weise, das heißt durch Verändern des ersten Längenänderungsmechanismus, der Abstand der Montagefüße der Außeneinheit eingestellt werden.

Dadurch wird das Bereitstellen eines Fundaments zur Montage der Außeneinheit wesentlich vereinfacht, da Fehler bei der Herstellung eines Streifenfundamentes bzw. eines Betonsockels hinsichtlich der notwendigen Abstände vermieden werden können. Gleichzeitig können auf einfache Art und Weise Fertigungstoleranten ausgeglichen werden.

Dabei kann der Steg zwischen 0 und 50% der Längserstreckung eines der Trägerelemente angeordnet sein, wobei der Steg bzw. die Stegabschnitte orthogonal zu den Trägerelementen angeordnet sind.

Dies ermöglicht die Anpassung der Montageeinheit an die jeweiligen Gegebenheiten.

Besonders vorteilhaft kann es bei der Montageeinheit sein, wenn mindestens zwei Stege zwischen den mindestens zwei Trägerelementen vorgesehen sind. Diese sind dann parallel zueinander angeordnet. Durch zwei Stege kann die Standfestigkeit der Montageeinheit auf dem darunterliegenden Fundament bzw. der darunterliegenden Sickerpackung erhöht werden.

Des Weiteren kann es bei der Montageeinheit von Vorteil sein, wenn die mindestens zwei Trägerelemente jeweils einen ersten Trägerabschnitt mit einem Montagepunkt und einen zweiten Trägerabschnitt mit einem Montagepunkt aufweisen. Dabei weisen die mindestens zwei Trägerelemente jeweils einen zweiten Längenänderungsmechanismus auf, um den Abstand der Montagepunkte der Trägerabschnitte variabel einzustellen.

Mittels des zweiten Längenänderungsmechanismus kann variabel auf die Tiefe der Außeneinheit bzw. auf den Abstand der Montagefüße eingegangen werden. Dies erhöht die Flexibilität der Montageeinheit in Bezug auf die Außeneinheiten, welche auf dieser montiert werden. Gleichzeitig damit können auch Fertigungsfehler bzw. leichte Abweichungen hinsichtlich der Größe der Außeneinheit, des Abstands der Montagefüße der Außeneinheit und der Setzung des Fundaments vermieden werden, denn diese können sowohl durch den ersten als auch durch den zweiten Längenveränderungsmechanismus ausgeglichen werden.

Dabei kann in vorteilhafterweise der erste Längenänderungsmechanismus zwei ineinander schiebbare Rohre aufweisen. Alternativ oder zusätzlich kann auch der zweite Längenänderungsmechanismus zwei ineinander schiebbare Rohre aufweisen. Dabei weisen diese Rohre komplementäre, ineinanderschiebbare Profile auf.

Durch die komplementären und ineinanderschiebbaren Profilen lassen sich auf einfache Art und Weise Längenänderungsmechanismen zur Verfügung stellen. Diese Profile können bei der Fertigung in den ersten und zweiten Stegabschnitt bzw. den ersten und zweiten Trägerabschnitt eingegossen werden. Dabei sollten die Länge der Profile so gewählt werden, dass die Stegabschnitte bzw. die Trägerabschnitte Stoß an Stoß aneinander liegen, wenn die Rohre komplett ineinandergeschoben sind. Denkbar ist auch, dass bei den Längenänderungsmechanismen eine Rastverbindung vorgesehen ist, beispielsweise eine Öffnung und ein Pin mit einer Feder, wobei diese Rastverbindung einrastet, wenn die maximale Länge bzw. der maximale Abstand der mittels des jeweiligen Längenänderungsmechanismus erreicht ist. Dadurch wird verhindert, dass die Profile auseinandergeschoben werden können. Gleichzeitig kann dadurch eine Versteifung des Längenänderungsmechanismus in seiner maximalen Längenerstreckung erreicht werden.

Besonders einfach und sicher kann das Ineinanderschieben der Profile der Längenänderungsmechanismen erzeugt werden, wenn die komplementären Profile rund oder rechteckig oder polygon sind.

Bei der Montageeinheit kann es weiterhin von Vorteil sein, wenn die mindestens zwei Trägerelemente jeweils zumindest eine Montageschiene aufweisen, wobei für jeden Montagepunkt eine in der zumindest einen Montageschiene verschiebbare Adapterplatte vorgesehen ist.

Die Adapterplatte kann dabei entlang der jeweiligen Schiene auf einfache Art und Weise an die jeweilige Position der Montagefüße der Außeneinheit angepasst werden. Dadurch können Abweichungen oder Herstellungsfehler bei der Montage der Montagefüße an der Außeneinheit ausgeglichen werden. Gleichzeitig kann später durch die verschiebbaren Adapterplatten in der Montageschiene auf Veränderungen in der Umgebung eingegangen werden.

Gleichzeitig können die Adapterplatten so ausgelegt sein, dass die Montagefüße bohrlos mit dieser verbunden werden können. Hierfür kann eine Rastverbindung vorgesehen sein, auf welche die Montagefüße aufgepresst werden. Des Weiteren können die Adapterplatten die Montagefüße umgreifen, und werden in diese eingeschoben.

In einer weiteren vorteilhaften Ausgestaltung der Montageeinheit weisen der erste Stegabschnitt, der zweite Stegabschnitt und die mindestens zwei Trägerelemente bzw. der erste und der zweite Trägerabschnitt ein Betonprofil auf.

Dieses Betonprofil bewirkt zum einen den festen Stand der Außeneinheit und ist zum anderen kostengünstig herstellbar. Dabei kann bzw. können in vorteilhafterweise der erste Längenänderungsmechanismus und, wenn vorgesehen, der zweite Längenänderungsmechanismus als Bewährungselemente des Betonprofils dienen.

Befindet sich der erste Längenänderungsmechanismus, und, wenn vorhanden, der zweite Längenänderungsmechanismus, in einem auseinandergeschobenen Zustand, so liegt zumindest eines der Profile frei und ist den Umgebungsbedingungen ausgesetzt.

Hierfür kann es bei der Montageinheit von Vorteil sein, wenn eine Abdeckung für einen freiliegenden ersten und/oder zweiten Längenveränderungsmechanismus vorgesehen ist. Dies schützt zum einen das jeweilige Rohr vor Umwelteinflüssen und hat zusätzliche einen positiven optischen Effekt.

Dabei ist es besonders vorteilhaft, wenn die Abdeckung aus Metall oder Kunststoff ist. Diese lassen sich einfach und kostengünstig herstellen, sind langlebig und einfach zu montieren.

Um die Standsicherheit der Montageeinheit zu erhöhen, kann es von Vorteil sein, wenn ein Erdanker zwischen mindestens zwei Stegen vorgesehen ist. Dieser Erdanker kann überein Blechteil jeweils mit einem Steg in einer kraftschlüssigen Verbindung sein und in den Boden oder das darunterliegende Betonfundament eingebracht werden.

Ein zweiter Aspekt der Erfindung ist ein Sickerschacht für eine Außeneinheit einer Wärmepumpe umfassend einen Schachtrahmen, wobei im eingebauten Zustand ein Innenraum des Schachtrahmens mit einer Sickerpackung befüllbar ist, und eine Schachtabdeckung zur Positionierung der Außeneinheit, wobei die Schachtabdeckung zur Abdeckung einer oberen Öffnung des Schachtrahmens auf dem Schachtrahmen angeordnet ist, und mindestens einer Öffnung für ein Rohr der Außeneinheit aufweist.

Der Sickerschacht und die Schachtabdeckung können in eine vorgesehene Erdreichaushebung eingesetzt werden. Die Schachtabdeckung ist dabei so ausgelegt, dass diese bereits nivelliert ist, um problemlos eine Außeneinheit darauf positionieren zu können.

Der Sickerschacht verhindert, dass Schmutz von oben und Erdreicheinspülungen von der Seite der Sickerpackung die Drainageleistung der Sickerpackung reduzieren oder diese gar komplett aussetzt. Ebenso verhindert der Sickerschacht, dass das abgeleitete Kondensat an der Hauswand ansteht und hier für Feuchtigkeitsschäden bei nicht ausreichendender Wandabdichtung sorgt. Um den Sickerschacht an jeweiligen Gegebenheiten anpassen zu können, kann der Querschnitt des Schachtrahmens polygonal, insbesondere rechteckig, oder oval sein.

Die Schachtabdeckung ermöglicht durch Demontage die Zugänglichkeit zur Sickerpackung und zu den Versorgungsleitungen und ermöglich so eine Reparatur oder Instandsetzung der der Leitungen oder der Sickerpackung.

Um den Einbau und die anschließende Montage der Außeneinheit zu erleichtern, kann der Sickerschacht in einer Einheitsgröße gefertigt werden. Demnach kann auf das Herstellen eines Streifenfundaments bzw. Betonsockel verzichtet werden.

Dabei kann eine vorteilhafte Ausgestaltung des Sickerschachts eine Schachtabdeckung mit einer Montageinheit gemäß des ersten Aspekts aufweisen. Dies erhöht die Flexibilität des Sickerschachts. Dadurch kann vor Ort problemlos die Montagepunkte an die Montagefüße der Außeneinheit angepasst werden. Die Montageeinheit kann dabei einstückig mit der Schachtabdeckung gefertigt sein.

In einer weiteren Ausgestaltung ist es denkbar, dass die Schachtabdeckung mindestens zwei Adapterplatten in mindestens einer Montageschiene aufweist, wobei die mindestens zwei Adapterplatten in der mindestens einen Montageschiene verschiebbar sind. Dabei können bevorzugt jeweils mindestens zwei Adapterplatten vorgesehen sein.

Die Adapterplatte kann dabei entlang der jeweiligen Montageschiene auf einfache Art und Weise an die jeweilige Position der Montagefüße der Außeneinheit angepasst werden. Dadurch können Abweichungen oder Herstellungsfehler bei der Montage der Montagefüße an der Außeneinheit ausgeglichen werden.

Gleichzeitig können die Adapterplatten so ausgelegt sein, dass die Montagefüße bohrlos mit dieser verbunden werden können. Hierfür kann eine Rastverbindung vorgesehen sein, auf welche die Montagefüße aufgepresst werden. Des Weiteren können die Adapterplatten die Montagefüße umgreifen, und werden in diese eingeschoben.

Des Weiteren kann es bei dem Sickerschacht vorteilhaft sein, wenn der Schachtrahmen Kunststoff und/oder Beton aufweist und dass die Schachtabdeckung Beton aufweist.

Dadurch lässt sich der Sickerschacht zum einen einfach und kostengünstig herstellen und zum anderen leicht transportieren.

Besonders vorteilhaft kann es bei dem Sickerschacht sein, wenn der Schachtrahmen an einer Außenseite und/oder einer Innenseite eine Dämmschicht. Alternativ oder zusätzlich ist es vorteilhaft, wenn die Schachtabdeckung an einer Unterseite eine Dämmschicht aufweist.

Als Innenseite wird dabei die Seite verstanden, welche dem Innenraum zugewandt ist und mit der Sickerpackung direkt oder über die Dämmschicht in Kontakt ist. Die Außenseite ist demnach die dem Innenraum abgewandte Seite.

Die Dämmung führt zu einer Reduzierung der Einbauhöhe des Sickerschachts, da die Dämmschicht die Temperatur in dem Sickerschacht regulieren kann, sodass die Eindringtiefe des Frosts reduziert wird und so das Einfrieren der Sickerpackung und des Kondensats verhindert. Damit einhergehend wird der Aufwand für Erdarbeiten geringer und der Bedarf an Kies für die Sickerpackung zum Abführen des Kondensats kann reduziert werden. Dies ermöglicht den flexiblen Einsatz, auch wenn die mögliche Einbautiefe gering ist.

Eine weitere vorteilhafte Ausgestaltung des Sickerschachts kann es sein, wenn der Schachtrahmen ein Hohlkammerprofil aufweist. Auch dies führt zu einer Isolierung der Sickerpackung gegen die Umgebung, da die Luft im Inneren der Hohlkammern isolierend wirkt. Demnach kann auch mittels des Hohlkammerprofils die Einbautiefe reduziert werden.

Um einen sicheren Stand zu gewährleisten kann es bei dem Sickerschacht von Vorteil sein, wenn die Schachtabdeckung verschiebesicher auf dem Schachtrahmen angeordnet ist. Dies kann über einen Stufenfalz gewährleistet sein.

Um die Fertigung weiter zu vereinfachen bzw. um kleine handliche Teile für eine flexible Anpassung an die örtlichen Gegebenheiten zu ermöglichen, kann der Schachtrahmen mindestens zwei aufeinander stapelbare Schachtrahmenelemente aufweisen. Dabei sind diese Schachtrahmenelemente über eine formschlüssige Verbindung, insbesondere ein Nut-Federsystem oder einen Stufenfalz, miteinander verbunden.

Des Weiteren ist es denkbar, dass eine erste Leerrohrdurchführung an der Schachtabdeckung vorgesehen ist und dass eine zweite Leerrohrdurchführung in einem unteren Abschnitt einer Seitenfläche des Schachtrahmens vorgesehen ist. Die ermöglicht es weitere Leitungen oder Rohre individuell einzubringen. Dabei ist der untere Abschnitt von der Schachtabdeckung abgewandt bzw. entfernt. Vorzugsweise entspricht der Abstand zwischen erster und zweiter Leerrohrdurchführung ca. 90% der Einbautiefe des Sickerschachts.

Nachfolgend wird die Erfindung anhand von Ausführungsbeispielen beschreiben, welche anhand der Abbildungen näher erläutert werden. Hierbei zeigen:
- Figur 1: eine schematische Darstellung einer Montageeinheit gemäß einem ersten Ausführungsbeispiel;
- Figur 2: eine schematische Darstellung einer Montageeinheit gemäß einem zweiten Ausführungsbeispiel;
- Figur 3: eine schematische Darstellung einer Montageeinheit gemäß einem zweiten Ausführungsbeispiel;
- Figur 4: eine Schnittdarstellung durch eine Montageeinheit gemäß des ersten oder des zweiten Ausführungsbeispiels;
- Figur 5: eine schematische Darstellung eines Sickerschachts gemäß einem ersten Ausführungsbeispiel;
- Figur 6: eine schematische Darstellung eines Sickerschachts gemäß einem zweiten Ausführungsbeispiel.

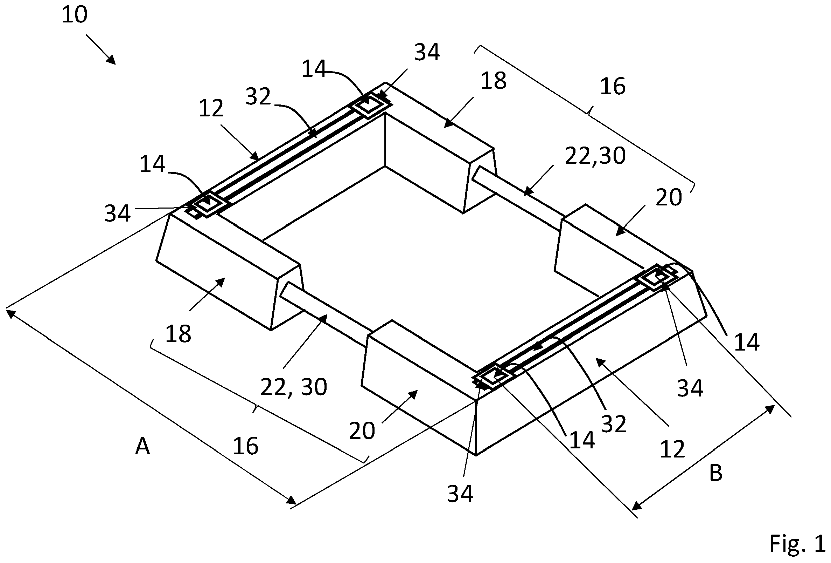

In den Figuren 1 bis 3 sind jeweils Montageeinheiten 10 für eine Außeneinheit einer Wärmepumpe in unterschiedlichen Ausführungen gezeigt. Diesen weisen jeweils mindestens zwei Trägerelemente 12 mit jeweils mindestens zwei zueinander beabstandeten Montagepunkten 14 zum Montieren der Montagefüße der Außeneinheit auf. Dabei sind die Trägerelemente 12 parallel zueinander angeordnet.

Des Weiteren weisen die Montageinheiten jeweils mindestens einen Steg 16, d.h. in den vorliegenden Ausführungsbeispielen jeweils zwei Stege 16, auf. Für alle Ausführungsbeispiele der Montageeinheit gilt dabei, das jeder Steg 16 einen ersten Stegabschnitt 18 und einen zweiten Stegabschnitt 20 aufweist, die jeweils mit einem der mindestens zwei Trägerelemente 12 verbunden sind. Dabei weist jeder Steg 16 einen ersten Längenänderungsmechanismus 22 auf, um einen Abstand A zwischen den mindestens zwei Trägerelementen 12 bzw. den zwei Stegabschnitten 18, 20 variabel einzustellen. Der Abstand A wird zwischen den Außenkanten der Trägerelemente 12 bestimmt.

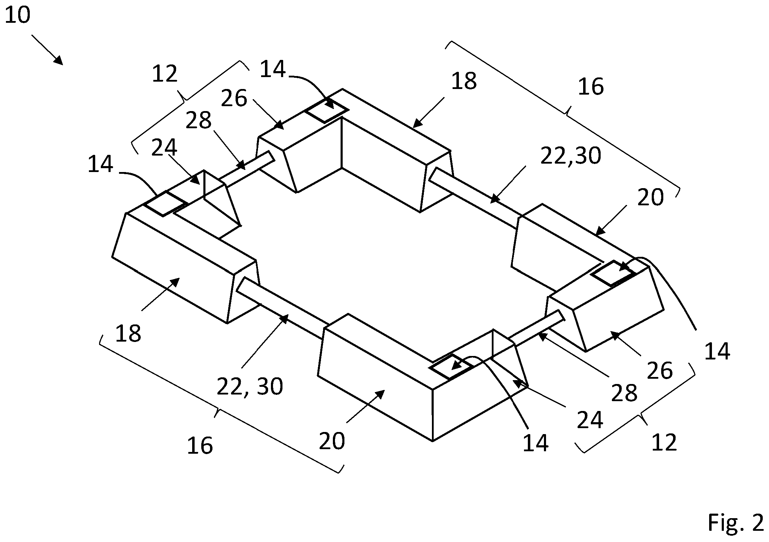

Das Ausführungsbeispiel gemäß Fig. 2 zeigt eine Montageeinheit 10 deren mindestens zwei Trägerelemente 12 jeweils mit einem zweiten Längenänderungsmechanismus 28 ausgestattet sind. Hierfür weisen die mindestens zwei Trägerelemente 12 jeweils einen ersten Trägerabschnitt 24 mit einem Montagepunkt 14 und einen zweiten Trägerabschnitt 26 mit einem Montagepunkt 14 auf. Der zweite Längenänderungsmechanismus 28 dient dazu den Abstand B der Montagepunkte 14 der Trägerabschnitte 12 variabel einzustellen.

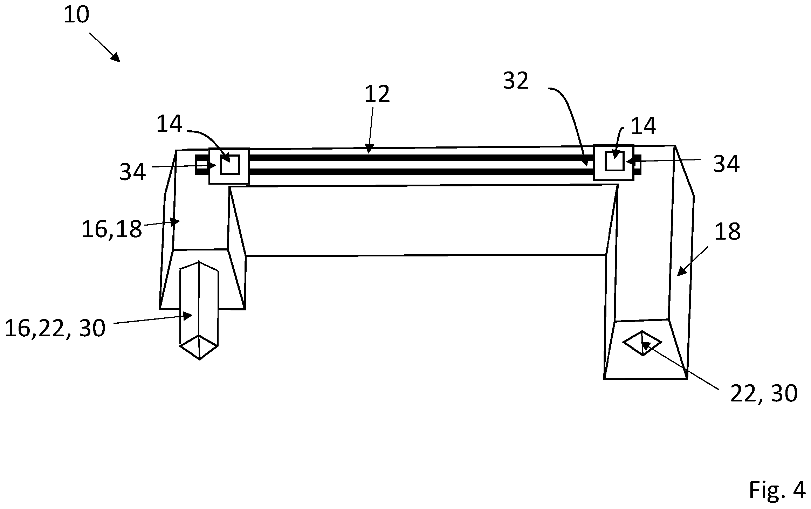

Zum Einstellen des Abstands A zwischen den mindestens zwei Trägerelementen 12 und des Abstands B zwischen den Montagepunkten weisen der erste Längenänderungsmechanismus 22 der Fig. 1 bis 3 und der zweite Längenänderungsmechanismus 28 der Fig. 2 zwei ineinander schiebbare Rohre 30 auf. Diese Rohre 30 sehen ein komplementäres und ineinanderschiebbares Profile vor, wie in Fig. 4 zu erkennen ist.

Das Profil der ineinander schiebbaren Rohre kann dabei rund oder rechteckig oder polygon sein. In den hier dargestellten Ausführungsbeispielen ist ein rechteckiges Profil der Rohre vorgesehen. Dieses dient gleichzeitig als Bewährung der Betonprofile der Trägerabschnitte 24, 26 der Trägerelemente 12 bzw. der Stegabschnitte 18, 20 der Stege 16.

Eine weitere Möglichkeit den Abstand B zwischen den Montagepunkten 14 variabel zu gestalten bzw. um Fertigungstoleranzen auszugleichen ist es, wie in den Fig. 1, 3 und 4 dargestellt, jeweils eine Montageschiene 32 auf den mindestens zwei Trägerelemente 12 vorzusehen. Dabei ist für jeden Montagepunkt 14 eine in der zumindest einen Montageschiene 32 verschiebbare Adapterplatte 34 vorgesehen. Auf diese Adapterplatte 34 kann dann jeweils ein Montagefuß oder ein Abschnitt eines Montagefußes der Außeneinheit positioniert werden. Die Positionierung bzw. die Montage des Montagefußes ist dabei bohrlos über einen nicht dargestellten Schnappmechanismus. Denkbar ist auch, dass der Montagefuß der Außeneinheit auf der Adapterplatte 34 oder auch dem Montagepunkt 14 festgeschraubt wird.

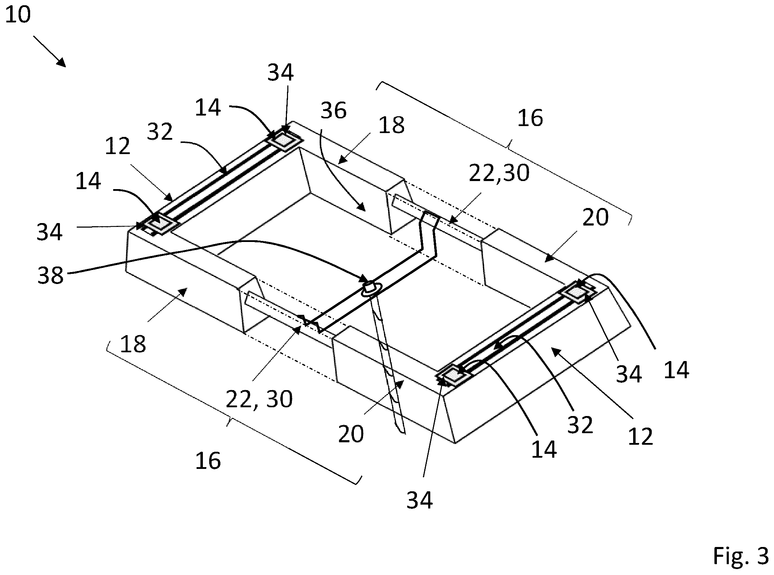

In Fig. 3 ist eine Erweiterung der Ausführungsform gemäß der Fig. 1 dargestellt. Dabei ist der Längenveränderungsmechanismus 22 auseinandergezogen und teilweise freiliegend. Um diesen freiliegenden Abschnitt vor Umwelteinflüssen schützen wird in diesem Bereich des jeweiligen Stegs 16 eine Abdeckung 36 aus Kunststoff angeordnet.

Des Weiteren ist bei dem Ausführungsbeispiel der Fig. 3 ein Erdanker 38 vorgesehen. Dieser besteht aus einem gebogenen Blech, welches um die Profile des jeweiligen Stegs greift und aus einer Schraube, welches das gebogene Blech nach unten zieht und am Boden bzw. im darunterliegenden hier nicht dargestellten Fundament bzw. der Sickerpackung verankert ist, um die Standsicherheit zu erhöhen.

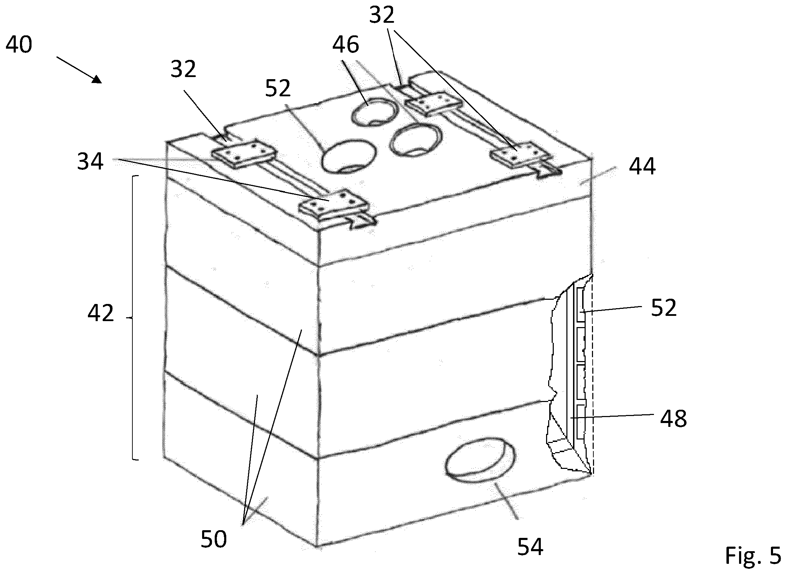

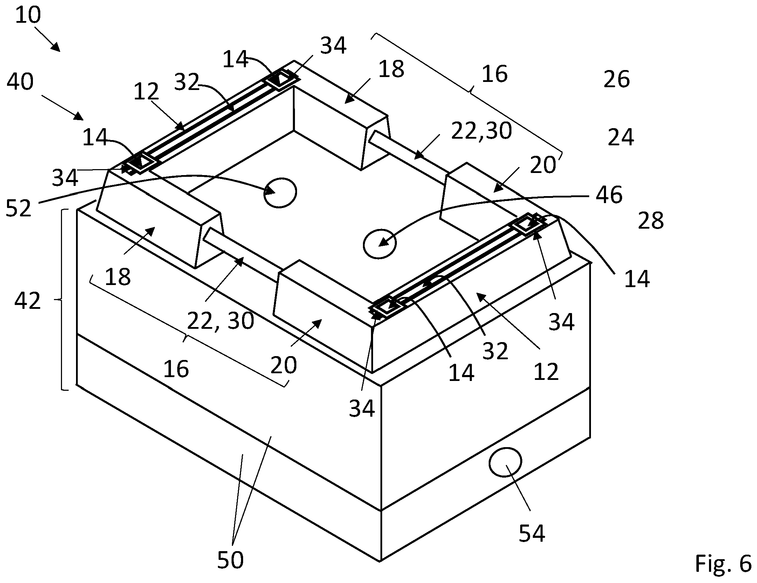

In den Fig. 5 und 6 ist jeweils ein Sickerschacht 40 für eine Außeneinheit einer Wärmepumpe dargestellt. Der Sickerschacht 40 umfasst einen Schachtrahmen 42, wobei im eingebauten Zustand ein Innenraum des Schachtrahmens 42 mit einer Sickerpackung befüllbar ist, und eine Schachtabdeckung 44 zur Positionierung der Außeneinheit. Die Schachtabdeckung 44 ist zur Abdeckung einer oberen Öffnung des Schachtrahmens 42 auf dem Schachtrahmen 42 angeordnet, und weist mindestens eine Öffnung 46 für ein Rohr der Außeneinheit auf.

Der Sickerschacht 40 gemäß Fig. 5 zeigt eine Schachtabdeckung 44 die mindestens zwei Adapterplatten 34 in mindestens einer Montageschiene 32 aufweist, wobei die mindestens zwei Adapterplatten 34 in der mindestens einen Montageschiene 32 verschiebbar ist.

In Fig. 6 ist ein Sickerschacht mit einer Montageinheit 10 gemäß der Fig. 1 dargestellt. Dabei weist die Montageinheit 10 die Montageschiene 32 mit den Adapterplatten 34 auf.

Dabei weisen die Adapterplatten 34 sowohl der Fig. 5 als auch der Fig. 6 die Montagepunkte 14 auf, auf welchen die Montagefüße der Außeneinheit positioniert werden.

Für eine einfache Handhabung weist der Schachtrahmen 42 der Fig. 5 Kunststoff und der Schachtrahmen der Fig. 6 Beton auf. Zusätzlich ist der Schachtrahmen 42 der Fig. 5 und 6 aus mindestens zwei aufeinander stapelbare Schachtrahmenelemente 50 zusammengesetzt. Dabei sind diese Schachtrahmenelemente 50 über eine formschlüssige Verbindung, insbesondere ein Nut-Federsystem oder einen Stufenfalz, miteinander verbunden.

In beiden Ausführungsbeispielen ist die Schachtabdeckung 44 Beton gefertigt.

Wie in dem Ausbruch in Fig. 5 zu erkennen ist zum Frostschutz ist bei beiden Sickerschächten 40 an der Innenseite des Schachtrahmens 42 Dämmschicht 48 vorgesehen. Um eine zusätzliche Isolation zu erreichen, weisen die Schachtrahmen 42 ein Hohlkammerprofil 52 auf.

Um die feste Positionierung der Schachtabdeckung 44 zu gewährleisten ist diese verschiebesicher über einen Stufenfalz auf dem Schachtrahmen 42 angeordnet.

### Bezugszeichenliste

- 10: Montageeinheit
- 12: Trägerelemente
- 14: Montagepunkte
- 16: Steg
- 18: erster Stegabschnitt
- 20: zweiter Stegabschnitt
- 22: erster Längenänderungsmechanismus
- 24: erster Trägerabschnitt
- 26: zweiter Trägerabschnitt
- 28: zweiter Längenänderungsmechanismus
- 30: Rohr
- 32: Montageschiene
- 34: Adapterplatte
- 36: Abdeckung
- 38: Erdanker

- 40: Sickerschacht
- 42: Schachtrahmen
- 44: Schachtabdeckung
- 46: Öffnung
- 48: Dämmschicht
- 50: Schachtrahmenelement
- 52: erste Leerrohrdurchführung
- 54: zweite Leerrohrdurchführung
- 56: Hohlkammerprofil

- A: Abstand der Trägerelemente
- B: Abstand der Montagepunkte

## Patentansprüche

1. Montageeinheit (10) für eine Außeneinheit einer Wärmepumpe mit mindestens zwei Trägerelementen (12) mit jeweils mindestens zwei zueinander beabstandeten Montagepunkten (14) zum Montieren der Montagefüße der Außeneinheit, wobei die Trägerelemente (12) parallel zueinander angeordnet sind und
mindestens einen Steg (16), insbesondere mindestens zwei Stege, mit einem ersten Stegabschnitt (18) und einen zweiten Stegabschnitt (20), die jeweils mit einem der mindestens zwei Trägerelemente (12) verbunden sind, wobei der mindestens eine Steg (16) einen ersten Längenänderungsmechanismus (22) aufweist, um einen Abstand (A) zwischen den mindestens zwei Trägerelementen (12) variabel einzustellen.

2. Montageeinheit (10) nach Anspruch 1,
**dadurch gekennzeichnet, dass**
die mindestens zwei Trägerelemente (12) jeweils einen ersten Trägerabschnitt (24) mit einem Montagepunkt (14) und einen zweiten Trägerabschnitt (26) mit einem Montagepunkt (14) aufweisen, wobei die mindestens zwei Trägerelemente (12) jeweils einen zweiten Längenänderungsmechanismus (28) aufweisen, um den Abstand (B) der Montagepunkte (14) der Trägerabschnitte (12) variabel einzustellen.

3. Montageeinheit (10) nach Anspruch 1 oder 2,
**dadurch gekennzeichnet, dass**
der erste und/oder der zweite Längenänderungsmechanismus (22, 28) zwei ineinander schiebbare Rohre (30) aufweist, wobei diese Rohre (30) komplementäre, ineinanderschiebbare Profile aufweisen.

4. Montageeinheit (10) nach Anspruch 3,
**dadurch gekennzeichnet, dass**
die Profile rund oder rechteckig oder polygon ist.

5. Montageeinheit (10) nach einem der vorhergehenden Ansprüche,
**dadurch gekennzeichnet, dass**
die mindestens zwei Trägerelemente (12) jeweils zumindest eine Montageschiene (32) aufweisen, wobei für jeden Montagepunkt (14) eine in der zumindest einen Montageschiene (32) verschiebbare Adapterplatte (34) vorgesehen ist.

6. Montageeinheit (10) nach einem der vorhergehenden Ansprüche,
**dadurch gekennzeichnet, dass**
der erste Stegabschnitt (18), der zweite Stegabschnitt (20) und die mindestens zwei Trägerelemente (12) bzw. der erste und der zweite Trägerabschnitt (24, 26) ein Betonprofil aufweisen.

7. Montageeinheit (10) nach einem der vorhergehenden Ansprüche,
**dadurch gekennzeichnet, dass**
eine Abdeckung (36) für einen freiliegenden ersten und/oder zweiten Längenveränderungsmechanismus (22, 28) vorgesehen ist, wobei insbesondere die Abdeckung (36) aus Metall oder Kunststoff ist.

8. Montageeinheit (10) nach einem der vorhergehenden Ansprüche,
**dadurch gekennzeichnet, dass**
ein Erdanker (38) zwischen mindestens zwei Stegen (16) vorgesehen ist.

9. Sickerschacht (40) für eine Außeneinheit einer Wärmepumpe umfassend einen Schachtrahmen (42), wobei im eingebauten Zustand ein Innenraum des Schachtrahmens (42) mit einer Sickerpackung befüllbar ist, und eine Schachtabdeckung (44) zur Positionierung der Außeneinheit, insbesondere eine Schachtabdeckung (44) mit einer Montageinheit (10) gemäß einem der vorhergehenden Ansprüche, wobei die Schachtabdeckung (44) zur Abdeckung einer oberen Öffnung des Schachtrahmens (42) auf dem Schachtrahmen (42) angeordnet ist, und mindestens einer Öffnung (46) für ein Rohr der Außeneinheit aufweist.

10. Sickerschacht (40) nach Anspruch 9,
**dadurch gekennzeichnet, dass**
die Schachtabdeckung (44) mindestens zwei Adapterplatten (34) in mindestens einer Montageschiene (32), vorzugsweise in jeweils mindestens zwei Adapterplatten (34), aufweist, wobei die mindestens zwei Adapterplatten (34) in der mindestens einen Montageschiene (32) verschiebbar ist.

11. Sickerschacht (40) nach Anspruch 9 oder 10,
**dadurch gekennzeichnet, dass**
der Schachtrahmen (42) Kunststoff und/oder Beton aufweist und dass die Schachtabdeckung (44) Beton aufweist, insbesondere, dass der Schachtrahmen (42) an einer Außenseite und/oder einer Innenseite eine Dämmschicht (48) aufweist und/oder dass
die Schachtabdeckung (44) an einer Unterseite eine Dämmschicht (38) aufweist.

12. Sickerschacht (40) nach einem der Ansprüche 9 bis 11,
**dadurch gekennzeichnet, dass**
der Schachtrahmen (42) ein Hohlkammerprofil (52) aufweist.

13. Sickerschacht (40) nach einem der Ansprüche 9 bis 12,
**dadurch gekennzeichnet, dass**
die Schachtabdeckung (44) verschiebesicher, insbesondere über eine Stufenfalz, auf dem Schachtrahmen (42) angeordnet ist.

14. Sickerschacht (40) nach einem der Ansprüche 9 bis 13,
**dadurch gekennzeichnet, dass**
der Schachtrahmen (42) mindestens zwei aufeinanderstapelbare Schachtrahmenelemente (50) aufweist, wobei diese Schachtrahmenelemente (50) über eine formschlüssige Verbindung, insbesondere ein Nut-Federsystem oder eine Stufenfalz, miteinander verbunden sind.

15. Sickerschacht (40) nach einem der Ansprüche 9 bis 14,
**dadurch gekennzeichnet, dass**
eine erste Leerrohrdurchführung (52) an der Schachtabdeckung (44) vorgesehen ist und dass eine zweite Leerrohrdurchführung (54) in einem unteren Abschnitt einer Seitenfläche des Schachtrahmens (42) vorgesehen ist.
